# EUROPEAN PATENT APPLICATION

(11) **EP 0 525 649 A1**
(43) Date of publication of application: **03.02.1993**
(21) Application number: 92112612.4
(22) Date of filing: 23.07.1992
(51) Int. Cl.: A61C 1/08

(54) **Dental handpiece having speed change assembly unit**

(30) Priority: 23.07.1991 JP 182583/91
(71) Applicant: NAKANISHI DENTAL MFG. CO. LTD., Kanuma-shi Tochigi-ken (JP)
(72) Inventor: Nakanishi, Takasuke, Kanuma-shi, Tochigi-ken (JP)
(74) Representative: Bockhorni, Josef, Dipl.-Ing.

(57) **Abstract**

A dental handpiece is provided with a speed change assembly unit (25). The handpiece contains a first rotary shaft (14) for transmitting rotation from a driving source, a first gear (18) secured to the rotary shaft (14), a second rotary shaft (15) for transmitting rotation to a dental tool (9) and a second gear (21) secured to the second rotary shaft (15). The speed change assembly unit (25) contains a first speed change gear (19) meshing with the first gear (18) and a second speed change gear (20) adapted for being rotated in association with the first speed change gear (19) and adapted for meshing with the second gear (21). The speed change assembly unit (25) is detachably housed within a handpiece main body (1).

## Description

### BAGKGROUND OF THE INVENTION

This invention relates to a dental handpiece and, more particularly, to a dental handpiece having a speed change assembly unit for changing the number of revolutions at the dental tool side with respect to that at the driving source side.

It is known to use a speed change unit in a dental handpiece for changing the number of revolutions when transmitting the revolutions of the driving shaft. It becomes necessary to raise the torque depending on the type of the dental tool employed in the dental handpiece. To this end, there is known a dental handpiece in which a speed change unit adapted for reducing the number of revolutions of the rotary shaft at the dental tool side as compared to that at the driving source side.

However, the conventional speed change unit is fixedly built into a grip sleeve and has a fixed speed change ratio. There are a variety of dental tools, such as those for which the torque needs to be increased for implant treatment or for which the number of revolutions needs to be raised for removing the tartar. However, if the number of revolutions of the handpiece is fixed, as mentioned above, only limited types of the dental tools can be exchanged. On the other hand, since the speed change unit is fixedly built into the handpiece, the maintenance operations, such as cleaning or repair cannot be performed satisfactorily on the speed change unit.

### SUMMARY OF THE INVENTION

It is an object of the present invention to provide a dental handpiece in which the speed change unit is provided as a unitary assembly to facilitate cleaning, exchange or repair and in which a wide variety of dental tools may be used by exchanging the speed change units as unitary assemblies whenever the necessity arises.

The above and other objects of the invention will become more apparent from the following description.

According to the present invention, there is provided a dental handpiece with a speed change assembly unit comprising a first rotary shaft for transmitting rotation from a driving source, a first gear secured to the rotary shaft, a second rotary shaft for transmitting rotation to a dental tool and a second gear secured to the second rotary shaft, the speed change assembly unit comprising a first speed change gear meshing with the first gear and a second speed change gear adapted for being rotated in association with the first speed change gear and adapted for meshing with the second gear, the speed change assembly unit being detachably housed within a handpiece main body.

### BRIEF DESCRIPTION OF THE DRAWINGS

Fig.1 is a partial cross-sectional view showing a dental handpiece according to the present invention.

Fig.2 is a partial cross-sectional view showing a speed-change assembly unit built into the dental handpiece shown in Fig.1.

Fig.3 is an exploded perspective view showing the speed change assembly unit built into the dental handpiece unit shown in Fig.1.

Fig.4 is an exploded perspective view showing the manner of interconnection between the speed change assembly unit and remaining units.

### PREFERRED EMBODIMENT OF THE INVENTION

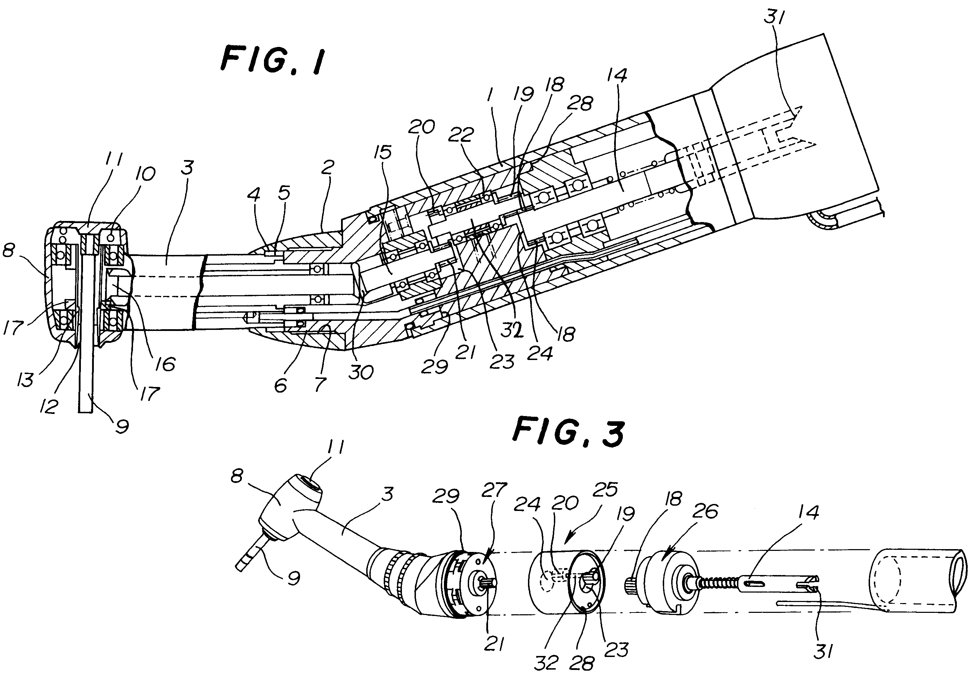

Referring to Fig.1, a grip sleeve 1 is detachably connected to a head 3 by a coupling member 2. The coupling member 2 provides for detachable connection between the grip sleeve 1 and the head 3 by having a rear projection 5 of the head 3 engaged in a notch 4 on the forward inner periphery of the coupling member 2 and by having a male thread 7 on the outer periphery of the foremost part of the grip sleeve 1 engaged with a female thread 6 formed on the rear inner periphery of the coupling member 2.

A head casing 8 is secured to the foremost part of the head 3. A driving shaft 13 for rotatably driving one of a variety of dental tools 9 by an electric motor as a driving source, not shown, is provided within the casing 8. The selected dental tool is manually thrust in position into a chuck 12. The dental tool 9 may be withdrawn from the chuck 12 by manually thrusting a push button 11 against the force of a spring 10 for exchange with other tools laid in store. The driving shaft 13 is rotated for driving the dental tool 9 by a rotary tooth 17 engaged with a bevel gear 16 at the foremost part of a forward rotary shaft 15 connected by a transmission system as later described to a rear rotary shaft 14 in turn connected to a motor shaft, not shown, for rotation therewith in unison.

The transmission system is arranged between the rear rotary shaft 14 and the forward rotary shaft 15 for transmitting the motor torque to the dental tool 9, and is designed to lower the number of revolutions thereof to raise the torque or, alternatively, to lower the torque to increase the number of revolutions. Specifically, with the standard number of revolutions of the rear rotary shaft 14 of 30,000 to 40,000 r.p.m., the ratio of the number of teeth of a rear gear 18 provided at the foremost part of the rear rotary shaft 14 to that of a rear speed change gear 19 meshing with the rear gear 18 is set to 1 : 2, while the ratio of the number of teeth of a forward speed change gear 20 coaxial with the rear speed change gear 19 to that of a forward gear 21 of the forward rotary shaft 15 meshing with the speed change gear 20 is set to 1 : 2, so that the number of revolutions of the forward rotary shaft 15 is reduced to one fourth to raise the torque transmitted to the dental tool 9. Conversely, the ratio of the number of teeth of the rear gear 18 to that of the rear speed change gear 19 and the ratio of the number of teeth of the forward speed change gear 20 to that of the forward gear 21 may each be set to 2 : 1 so that the number of revolutions of the forward rotary shaft 15 towards the dental tool 9 may be increased to four times that of the rear rotary shaft 14 towards the electric motor as the driving source. An intermediate gear 30 is provided at a corner of a mid part of the forward rotary shaft 15 for transmitting the torque to the bevel gear 16. Meanwhile, the number of teeth of the rear speed change gear 19 may be selected to be the same as that of the forward speed change gear 20 which is arranged coaxially with the rear speed change gear 19.

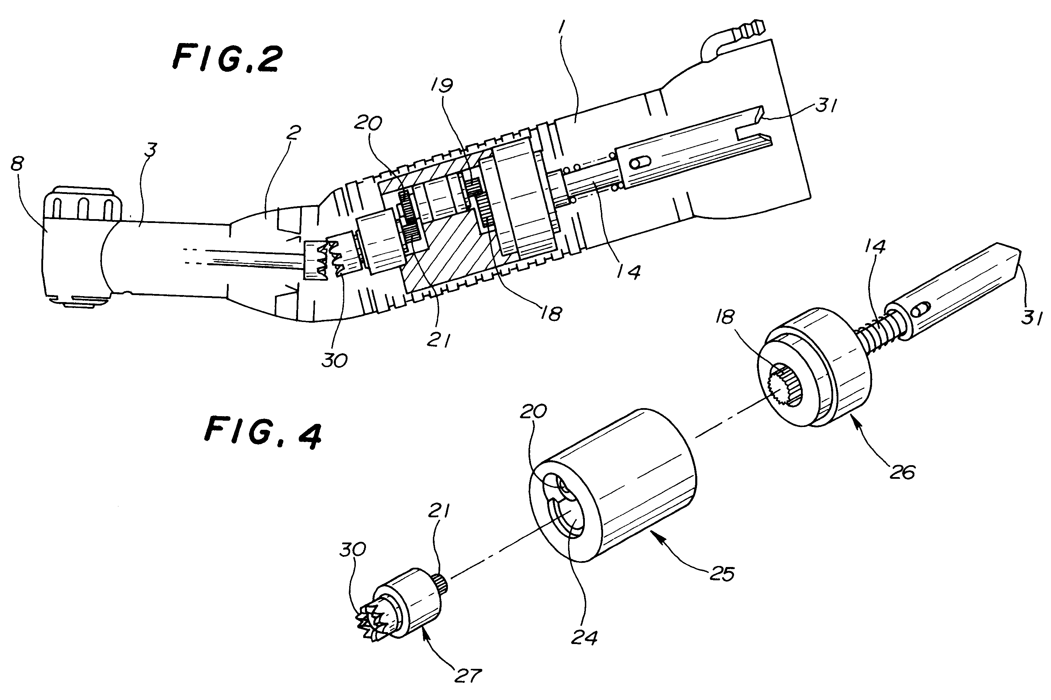

The speed change unit is designed as a unitary assembly, as shown in Figs.2 to 4, and is composed of an intermediate shaft assembly unit 25, a coupling shaft assembly unit 26 and an output shaft assembly unit 27, these units 25 to 27 being detachably housed within the inside of the grip sleeve 1. The intermediate assembly unit 25 is provided with the rear speed change gear 19 and the forward speed change gear 20 both rotatably mounted on a shaft 32 by means of bearings 22. These gears 19, 20 are partially protruded to outside through notch-like apertures 23, 24 in a casing of the unit 25, as shown in Fig.3. The coupling shaft assembly unit 26 is provided with the rear rotary shaft 14 supported by a bearing, not shown, and the rear gear 18 is secured to the foremost part of the shaft 14. The output shaft assembly unit 27 is provided with the forward rotary shaft 15, supported by a bearing, and the forward gear 21 is secured to the rear end of the shaft 15. The units 25 to 27 are detachably connected to each other by a projection 28 and a recess 28 of the unit 25. In the connected state of the units, the gears 18, 19, 20 and 21 are aligned to and engaged with one another.

In operation, the rear rotary shaft 14 is rotationally driven by the electric motor, not shown, as a driving source. This rotation is transmitted to the rear speed change gear 19 meshing with the rear gear 18, thence to the forward speed change gear 20 mounted coaxially with the gear 19, and thence to the forward gear 21 meshing with the gear 20 for rotationally driving the forward rotary shaft 15. The dental tool 9 is rotated by the rotary tooth 17 meshing with the bevel gear 16 provided at the foremost part of the rotary shaft 15 and by the driving shaft 13 secured to the rotary tooth 17. The number of revolutions of the forward rotary shaft 15 may be increased or decreased relative to that of the rear rotary shaft 14 depending on the ratio of the number of teeth of the rear gear 18 to that of the rear speed change gear 19 and by the ratio of the number of teeth of the forward speed change gear 20 to that of the forward gear 21.

## Claims

1. A dental handpiece with a speed change assembly unit (25), comprising a first rotary shaft (14) for transmitting rotation from a driving source, a first gear (18) secured to said rotary shaft (14), a second rotary shaft (15) for transmitting rotation to a dental tool (9) and a second gear (21) secured to said second rotary shaft (15) characterized in that said speed change assembly unit (25) comprises a first speed change gear (19) meshing with said first gear (18) and a second speed change gear (20) adapted for being rotated in association with said first speed change gear (19) and adapted for meshing with said second gear (21), and said speed change assembly unit (25) is detachably housed within a handpiece main body (1).

2. A dental handpiece as defined in claim 1 wherein said first speed change gear (19) and said second speed change gear (20) are secured to same shaft (32) and adapted for being rotated in unison.

3. A dental handpiece as defined in claim 1 wherein a first driving transmission unit (26) comprising said first rotary shaft (14) and said first gear (18) is detachably housed within the handpiece main body (1).

4. A dental handpiece as defined in claim 1 or 3 wherein a second driving transmission unit (27) comprising said second rotary shaft (15) and said second gear (21) is detachably housed within the handpiece main body (1).

5. A dental handpiece as defined in claim 1 wherein number of teeth of said first speed change gear (19) is different from that of said second speed change gear (20).

6. A dental handpiece as defined in claim 1 wherein number of teeth of said first speed change gear (19) is equal to that of said second speed change gear (20).

7. A dental handpiece as defined in claim 1 further comprising an additional speed change assembly unit having number of teeth of at least one of said first speed change gear (19) and said second speed change gear (20) different from that of the first and second speed change gears of the firstly stated speed change assembly unit (25).
